(19) Europäisches Patentamt
European Patent Office
Office européen des brevets

(11) EP 4 693 552 A1

(12) **EUROPEAN PATENT APPLICATION**

(43) Date of publication:
**11.02.2026 Bulletin 2026/07**

(21) Application number: **25181972.8**

(22) Date of filing: **11.06.2025**

(51) International Patent Classification (IPC):
***H01M 10/052*** (2010.01) ***H01M 10/0525*** (2010.01)
***H01M 10/0567*** (2010.01) ***H01M 10/0568*** (2010.01)
***H01M 10/0569*** (2010.01)

(52) Cooperative Patent Classification (CPC):
**H01M 10/0567; H01M 10/052; H01M 10/0525; H01M 10/0568; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 KR 20240105373**

(71) Applicant: **SAMSUNG SDI CO., LTD.**
**Yongin-si, Gyeonggi-do 17084 (KR)**

(72) Inventors:
- **Shin, Youngkyeong**
  **Yongin-si, Gyeonggi-do 17084 (KR)**
- **Kim, Sanghoon**
  **Yongin-si, Gyeonggi-do 17084 (KR)**
- **Tsay, Olga**
  **Yongin-si, Gyeonggi-do 17084 (KR)**
- **Choi, Hyunbong**
  **Yongin-si, Gyeonggi-do 17084 (KR)**
- **Kim, Sohee**
  **Yongin-si, Gyeonggi-do 17084 (KR)**
- **Yang, Yeji**
  **Yongin-si, Gyeonggi-do 17084 (KR)**
- **Park, Hongryeol**
  **Yongin-si, Gyeonggi-do 17084 (KR)**
- **Park, Sangwoo**
  **Yongin-si, Gyeonggi-do 17084 (KR)**
- **Jun, Dasol**
  **Yongin-si, Gyeonggi-do 17084 (KR)**
- **Lim, Seiyeon**
  **Yongin-si, Gyeonggi-do 17084 (KR)**
- **Ji, Woojung**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(54) **ELECTROLYTE FOR RECHARGEABLE LITHIUM BATTERY AND RECHARGEABLE LITHIUM BATTERY INCLUDING THE SAME**

(57) Disclosed are electrolytes and rechargeable lithium batteries. The electrolyte for a rechargeable lithium battery includes a lithium salt, a non-aqueous organic solvent, a first additive represented by Chemical Formula 1, and a second additive represented by Chemical Formula 2.

Chemical Formula 1

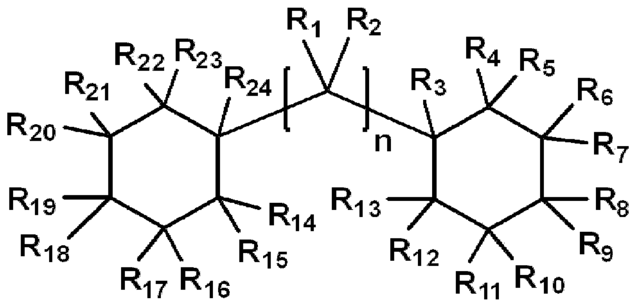

EP 4 693 552 A1

Chemical Formula 2

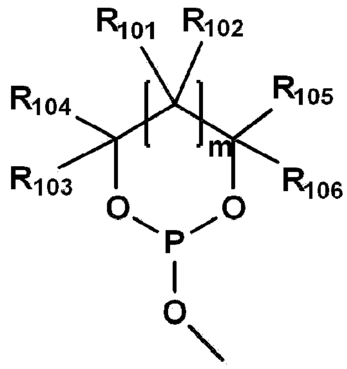

## Description

## BACKGROUND

### 1. Field

Embodiments of the present disclosure relate to an electrolyte for a rechargeable lithium battery and a rechargeable lithium battery including the same, and, for example, to an electrolyte including a lithium salt, a non-aqueous organic solvent, a first additive represented by Chemical Formula 1, and a second additive represented by Chemical Formula 2 for a rechargeable lithium battery, and a rechargeable lithium battery including the electrolyte.

### 2. Description of Related Art

Recently, with the rapid spread of battery using electronic devices, such as mobile phones, laptop computers, and electric vehicles, there is a rapidly increasing interest in rechargeable batteries having high energy density and high capacity. Therefore, intensive research has been conducted to improve performance of rechargeable lithium batteries.
A rechargeable lithium battery may include a positive electrode, a negative electrode, and an electrolyte, which positive and negative electrodes may include an active material in which intercalation and deintercalation are possible, and may generate electrical energy caused by oxidation and reduction reactions if (e.g., when) lithium ions are intercalated and deintercalated.
A lithium salt dissolved in a non-aqueous organic solvent may be used as the electrolyte of the rechargeable lithium battery. Characteristics of the rechargeable lithium battery may be exhibited by complex reactions between the positive electrode and the electrolyte and between the negative electrode and the electrolyte. Accordingly, the use of a suitable or appropriate electrolyte is one variable for improvement of rechargeable lithium batteries.

## SUMMARY

The invention is defined by the appended claims. The description that follows is subjected to this limitation. Any disclosure lying outside the scope of said claims is only intended for illustrative as well as comparative purposes.
An embodiment of the present disclosure provides an electrolyte whose lifespan characteristics and stability are all improved at room and high temperatures.
An embodiment of the present disclosure provides a rechargeable lithium battery including the electrolyte.
According to an embodiment of the present disclosure, an electrolyte for a rechargeable lithium battery includes: a lithium salt; a non-aqueous organic solvent; a first additive represented by Chemical Formula 1; and a second additive represented by Chemical Formula 2.

Chemical Formula 1

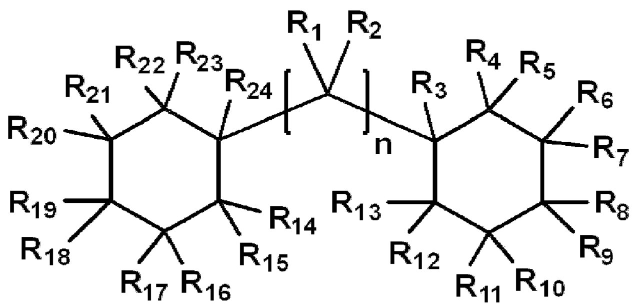

Chemical Formula 2

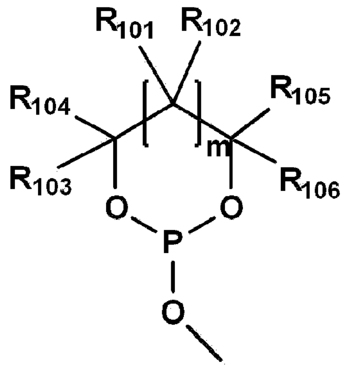

In Chemical Formulae 1 and 2,

$R_1$ and $R_2$ are each independently be hydrogen or a cyclohexyl isocyanate residue,
$R_3$ to $R_{24}$ are each independently be hydrogen, a halogen group, a C1 to C10 alkyl group, or an isocyanate group,
at least one selected from among $R_3$ to $R_{13}$ is an isocyanate group,
at least one selected from among $R_{14}$ to $R_{24}$ is an isocyanate group,
$R_{101}$ to $R_{106}$ are each independently be hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,
n is an integer from 1 to 10, and
m is an integer of from or 1.

According to an embodiment of the present disclosure, a rechargeable lithium battery includes: a positive electrode that includes a positive electrode active material; a negative electrode that includes a negative electrode active material; and the electrolyte for the rechargeable lithium battery.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

FIG. 1 is a conceptual diagram partially showing a rechargeable lithium battery according to an embodiment of the present disclosure.
FIGS. 2-5 are simplified diagrams showing rechargeable lithium batteries according to embodiments of the present disclosure.

## DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to disclose the subject matter of the present disclosure and let those skilled in the art fully know the scope of the present disclosure.

In this description, it will be understood that, if (e.g., when) an element is referred to as being on another element, the element can be directly on the other element or intervening elements may be present between therebetween. In the drawings, thicknesses of some components may be exaggerated to effectively explain the technical contents of the present disclosure. Like reference numerals refer to like elements throughout the specification.

Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, and/or a reaction product.

In this description, unless otherwise separately defined, the term "substituted" indicates that at least one

hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

In this description, unless otherwise separately defined, the term "substituted" may indicate that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, a cyano group, or a combination thereof.

In more detail, the term "substituted" may indicate that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may indicate that at least one hydrogen of a substituent or a compound is substituted by deuterium, a halogen group, a C1 to C20 alkyl group, a C6 to C30 aryl group, a C1 to C10 fluoroalkyl group, or a cyano group. In embodiments, the term "substituted" may indicate that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may indicate that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.

FIG. 1 is a conceptual diagram partially showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated with the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 or the negative electrode 20.

Recently, many commercialized lithium ion battery have used $LiPF_6$ as a lithium salt in the electrolyte. However, $LiPF_6$ may react with moisture within the lithium ion battery to form PFs, while being decomposed into HF, and the highly reactive substance HF may induce a degradation in lifespan characteristics and high-temperature storage properties of the lithium ion battery. Although a fluorophosphite-based additive is used which can stabilize PFs by donating electrons and utilizing Lewis acid properties of PFs, $F^-$ ions released from the fluorophosphite-based additive may cause side reactions to cause degradation in performance of the lithium ion battery. For example, if (e.g., when) the positive electrode active material includes lithium-iron-phosphate-based oxide, such as lithium iron phosphate ($LiFePO_4$, LFP) and/or lithium manganese iron phosphate ($LiMnFePO_4$, LMFP), the side reactions may accelerate the degradation in performance of the lithium ion battery.

As an electrolyte for a rechargeable lithium battery according to an embodiment of the present disclosure includes a first additive represented by Chemical Formula 1 and a second additive represented by Chemical Formula 2, it may be possible to effectively suppress or reduce side reactions resulting from $F^-$ ions and to improve lifespan characteristics and stability not only at room temperature but also at high temperatures.

## Electrolyte for Rechargeable Lithium Battery

The electrolyte for a rechargeable lithium battery according to an embodiment of the present disclosure includes a lithium salt, a non-aqueous organic solvent, a first additive represented by Chemical Formula 1, and a second additive represented by Chemical Formula 2.

Chemical Formula 1

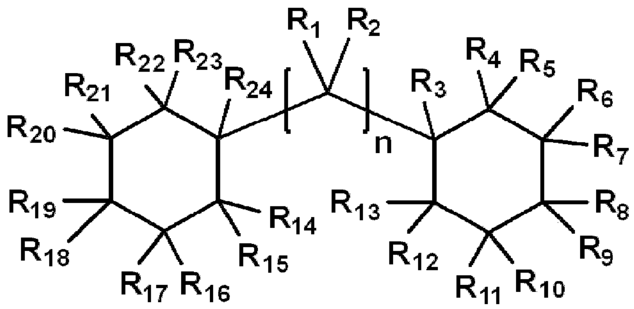

Chemical Formula 2

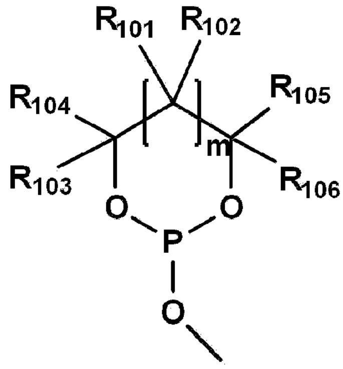

In Chemical Formulae 1 and 2,

$R_1$ and $R_2$ are each independently be hydrogen or a cyclohexyl isocyanate residue.
$R_3$ to $R_{24}$ are each independently be hydrogen, a halogen group, a C1 to C10 alkyl group, or an isocyanate group.

At least one selected from among $R_3$ to $R_{13}$ is an isocyanate group, and at least one selected from among $R_{14}$ to $R_{24}$ is an isocyanate group.

$R_{101}$ to $R_{106}$ are each independently be hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

The subscript n is an integer from 1 to 10.

The subscript m is an integer from 0 or 1.

The non-aqueous organic solvent may serve as a medium to transmit ions that participate in electrochemical reactions of batteries.

The non-aqueous organic solvent may include a carbonate-based solvent, an ester-based solvent, an ether-based solvent, a ketone-based solvent, an alcohol-based solvent, an aprotic solvent, or a mixture thereof. The non-aqueous organic solvent may be used alone or in a mixture of two or more substances.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

In embodiments, if (e.g., when) a carbonate-based solvent is used as the non-aqueous organic solvent, cyclic carbonate and chain carbonate may be mixed and used, and the cyclic carbonate and the chain carbonate may be mixed in a volume ratio from 1:1 to 1:9.

In an embodiment, the non-aqueous organic solvent may include at least one selected from among ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

For example, the non-aqueous organic solvent may be a mixed solvent of ethylene carbonate (EC), ethylmethyl carbonate (EMC), and dimethyl carbonate (DMC).

For example, the ethylene carbonate (EC) may be included in an amount from 10 vol% to 30 vol% relative to the total volume of the non-aqueous organic solvent. The ethylmethyl carbonate (EMC) may be included in an amount from 20 vol% to 70 vol% relative to the total volume of the non-aqueous organic solvent. The dimethyl carbonate (DMC) may be included in an amount from 20 vol% to 70 vol% relative to the total volume of the non-aqueous organic solvent.

The ethylene carbonate (EC), the ethylmethyl carbonate (EMC), and the dimethyl carbonate (DMC) may be present in a volume ratio of 1:a:b, where a may be 1 to 3 or 1.5 to 2.5, and b may be 1 to 3 or 1.5 to 2.5.

The lithium salt may be a material that is dissolved in the organic solvent to serve as a supply source of lithium ions in batteries and plays a role in enabling a basic operation of rechargeable lithium batteries and promoting transportation of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

In an embodiment, the lithium salt may include one or more selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBOP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, and $LiC_4F_9SO_3$. For example, the lithium salt may include $LiPF_6$.

The lithium salt may have a concentration from 0.1 M to 2.0 M. For example, the lithium salt may have a concentration from 0.5 M to 1.0 M, equal to or less than 2.0 M, equal to or less than 1.7 M, or equal to or less than 1.5 M. As the concentration of the lithium salt falls within the ranges above, the electrolyte may suitably or appropriately maintain its conductivity (e.g., electrical conductivity) and viscosity.

According to an embodiment of the present disclosure, the first additive may be represented by Chemical Formula 1.

Chemical Formula 1

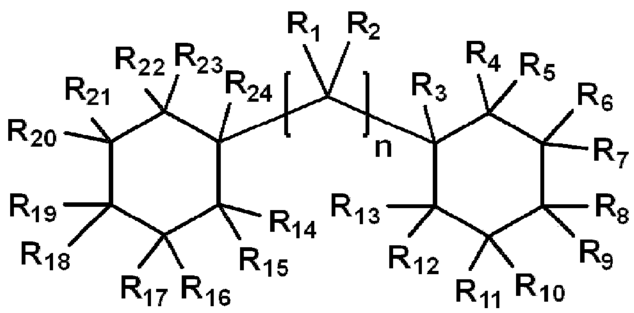

$R_1$ and $R_2$ may each independently be hydrogen or a cyclohexyl isocyanate residue, for example, $R_1$ and $R_2$ may each be hydrogen.

$R_3$ to $R_{24}$ may each independently be hydrogen, a halogen group, a C1 to C10 alkyl group, or an isocyanate group, at least one selected from among $R_3$ to $R_{13}$ is an isocyanate group, and at least one selected from among $R_{14}$ to $R_{24}$ is an isocyanate group.

In an embodiment, $R_3$ to $R_{24}$ may each be identical or different and may each independently be hydrogen, a halogen group, a C1 to C10 alkyl group, a C1 to C5 alkyl group, or an isocyanate group, one selected from among $R_3$ to $R_{13}$ may be an isocyanate group, and one selected from among $R_{14}$ to $R_{24}$ may be an isocyanate group. For example, $R_3$ to $R_7$, $R_9$ to $R_{18}$, and $R_{20}$ to $R_{24}$ may each be hydrogen, and each of $R_8$ and $R_{19}$ may be an isocyanate group.

According to an embodiment of the present disclosure, the first additive may be represented by Chemical Formula 1-1.

Chemical Formula 1-1

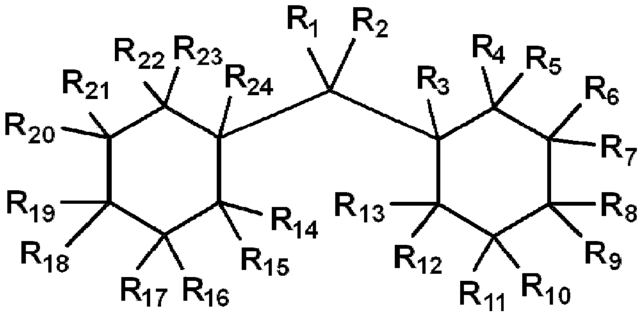

In Chemical Formula 1-1,

$R_1$ to $R_{24}$ are as defined as described with respect to Chemical Formula 1.

According to an embodiment of the present disclosure, the first additive may be represented by Chemical Formula 1-2.

Chemical Formula 1-2

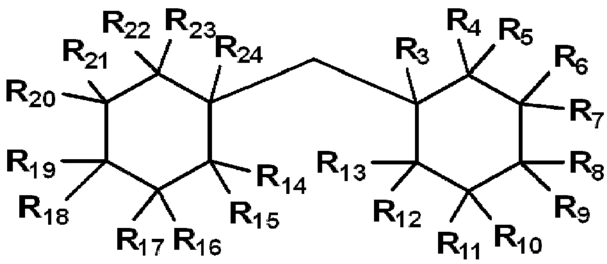

In Chemical Formula 1-2,

$R_3$ to $R_{24}$ are as defined as described with respect to Chemical Formula 1.

According to an embodiment of the present disclosure, the first additive may be represented by Chemical Formula 1-3.

Chemical Formula 1-3

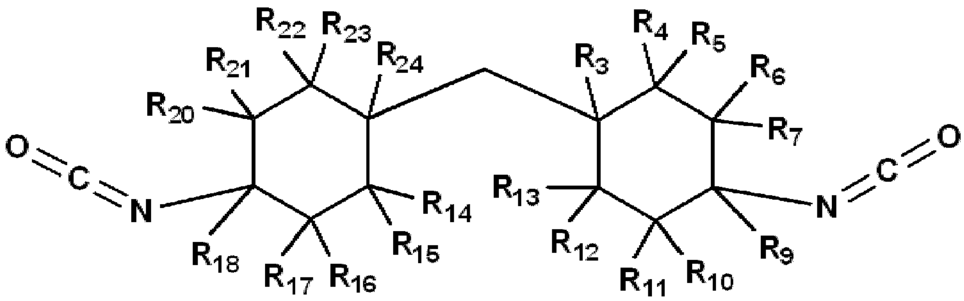

In Chemical Formula 1-3,

$R_3$ to $R_7$, $R_9$ to $R_{18}$, and $R_{20}$ to $R_{24}$ are as defined as described with respect to Chemical Formula 1.

For example, the first additive may be a compound represented by Chemical Formula 1-3-1.

Chemical Formula 1-3-1

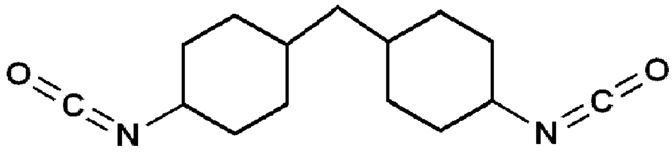

The first additive may be present in an amount from 0.01 wt% to 5 wt% relative to the total weight of the electrolyte for a rechargeable lithium battery. For example, the first additive may be present in an amount from 0.05 wt% to 2.5 wt%, 0.1 wt% to 2 wt%, 0.2 wt% to 1.5 wt%, or 0.5 wt% to 1 wt% relative to the total weight of the electrolyte for a rechargeable lithium battery.

According to an embodiment of the present disclosure, the second additive is represented by Chemical Formula 2.

Chemical Formula 2

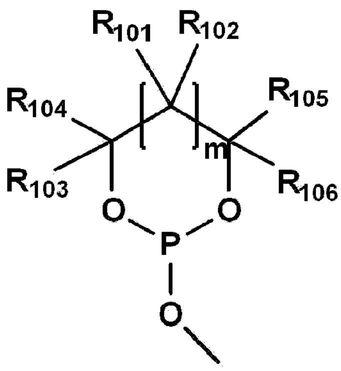

$R_{101}$ to $R_{106}$ are each be hydrogen, and m may be 0 or 1.

The second additive may be represented by Chemical Formula 2-1 or Chemical Formula 2-2.

Chemical Formula 2-1

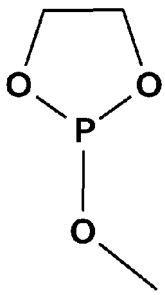

Chemical Formula 2-2

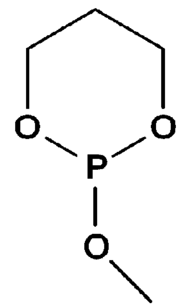

The second additive may be present in an amount from 0.01 wt% to 5 wt% relative to the total weight of the electrolyte for a rechargeable lithium battery. For example, the second additive may be present in an amount from 0.05 wt% to 2.5 wt%, 0.1 wt% to 2 wt%, 0.2 wt% to 1.5 wt%, or 0.5 wt% to 1 wt% relative to the total weight of the electrolyte for a rechargeable lithium battery.

A weight ratio of the first additive and the second additive may be 1:5 to 5:1. For example, a weight ratio of the first additive and the second additive may be 1:3 to 3:1 or 1:2 to 2:1. As the amounts and weight ratio of the first and second additives fall within the ranges above, it may be possible to effectively achieve a rechargeable lithium battery having improved storage and lifespan characteristics at room and high temperatures.

**Rechargeable Lithium Battery**

A rechargeable lithium battery according to embodiments of the present disclosure may include a positive electrode including a positive electrode active material, a negative electrode including a negative electrode active material, and the aforementioned electrolyte for the rechargeable lithium battery.

Based on a shape of a rechargeable lithium battery, the rechargeable lithium battery may be classified into cylindrical, prismatic, pouch, and coin types (or kinds). FIGS. 2-5 are diagrams showing rechargeable lithium batteries according to embodiments of the present disclosure, with FIG. 2 showing a cylindrical battery, FIG. 3 showing a prismatic battery, and FIGS. 4-5 showing pouch-type batteries. Referring to FIGS. 2-5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which electrode tab 70 serves as an electrical path to externally induce a current generated in the electrode assembly 40.

**Positive Electrode 10**

A rechargeable lithium battery according to an embodiment of the present disclosure may include a positive electrode. For example, a rechargeable lithium battery according to an embodiment of the present disclosure may include a positive electrode containing a positive electrode active material.

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material).

An amount of the positive electrode active material in the positive electrode active material layer AML1 may be 90 wt% to 99.5 wt% relative to 100 wt% of the positive electrode active material layer AML1. For example, an amount of the positive electrode active material in the positive electrode active material layer AML1 may be 92 wt% to 99.5 wt% or 95 wt% to 99 wt% relative to 100 wt% of the positive electrode active material layer AML1.

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from among cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

The positive electrode active material may include lithium composite oxide represented by Chemical Formula 3.

Chemical Formula 3 $$Li_xM^1_yM^2_zM^3_{1-y-z}O_{2-a}X_a$$

In Chemical Formula 3,
x, y, z, and a may satisfy the relationship of $0.5 \leq x \leq 1.8$, $0 \leq y \leq 1$, $0 \leq z \leq 1$, $0 \leq a \leq 0.05$, and $0 \leq y+z \leq 2$.

$M^1$, $M^2$, and $M^3$ may each independently be at least one element selected from among Ni, Co, Mn, Al, B, Ba, Ca, Ce, Cr, Fe, Mo, Nb, Si, Sr, Mg, Ti, V, W, Zr, and La.

X may be at least one element selected from among F, S, P, and Cl.

For example, the lithium composite oxide may include a compound represented by one of the following chemical formulae. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae above, A may be Ni, Co, Mn, or a combination thereof, X may be Al, Ni, Co, Mn, Cr, Fe, Mg, Sr, V, a rare-earth element, or a combination thereof, D may be O, F, S, P, or a combination thereof, G may be Al, Cr, Mn, Fe, Mg, La, Ce, Sr, V, or a combination thereof, and $L^1$ may be Mn, Al, or a combination thereof.

In the lithium composite oxide, nickel may be present in an amount of equal to or greater than 50 mol% relative to 100 mol% of metal except lithium. For example, in the lithium composite oxide, nickel may be present in an amount of equal to or greater than 65 mol%, equal to or greater than 80 mol%, equal to or greater than 85 mol%, equal to or greater than 90 mol%, equal to or greater than 91 mol%, equal to or greater than 94 mol%, or equal to or greater than 99 mol% relative to 100 mol% of metal except lithium.

For example, the positive electrode active material may include one or more selected from among lithium iron phosphate (LFP), lithium manganese iron phosphate (LMFP), lithium nickel cobalt aluminum oxide (NCA), lithium nickel cobalt manganese oxide (NCM), lithium cobalt oxide (LCO), lithium manganese oxide (LMO), and lithium nickel manganese oxide (LNMO).

The positive electrode may include a binder. The positive electrode binder may serve to improve attachment of positive electrode active material particles to each other and also to improve attachment of the positive electrode active material to the current collector COL1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

For example, the positive electrode may include a binder including one or more selected from among polyvinyl alcohol, carboxymethyl cellulose, hydroxypropyl cellulose, diacetyl cellulose, polyvinyl chloride, carboxylated polyvinyl chloride, polyvinyl fluoride, polyethylene oxide, polyvinylpyrrolidone, polyurethane, polytetrafluoroethylene, polyvinylidene fluoride, polyethylene, and polypropylene.

The binder may be present in an amount from 0.5 wt% to 5 wt% relative to the total weight of the positive electrode. For example, the binder may be present in an amount from 1 wt% to 4.5 wt% or 1.5 wt% to 4 wt% relative to the total weight of the positive electrode.

The conductive material may be used to provide an electrode with conductivity (e.g., electrical conductivity) or to increase electrical conductivity of the electrode, and any suitable conductive material that does not cause a chemical change in a battery (e.g., does not cause an undesirable chemical change in the rechargeable lithium battery) may be used as the conductive material. The conductive material may include, for example, a carbon-based material such as natural graphite, artificial graphite, carbon black, acetylene black, Ketjen black, carbon fiber, carbon nano-fiber, and/or carbon nano-tube; a metal powder and/or metal fiber containing one or more selected from among copper, nickel, aluminum, and silver; a conductive polymer (e.g., an electrically conductive polymer) such as a polyphenylene derivative; or a mixture thereof.

For example, the positive electrode may include a conductive material (e.g., an electrically conductive material) including a carbon-based material, a metal-based material in the form of metal powder and/or metal fiber, a conductive

polymer, or a mixture thereof.

The positive electrode conductive material may be present in an amount from 0.5 wt% to 5 wt% relative to the total weight of the positive electrode. For example, the positive electrode conductive material may be present in an amount from 0.5 wt% to 4 wt%, 0.5 wt% to 3.5 wt%, or 0.5 wt% to 2 wt% relative to the total weight of the positive electrode.

Aluminum (Al) may be used as the current collector COL1, but the present disclosure is not limited thereto.

**Negative Electrode 20**

A rechargeable lithium battery according to an embodiment of the present disclosure may include a negative electrode. For example, a rechargeable lithium battery according to an embodiment of the present disclosure may include a negative electrode including a negative electrode active material.

The negative electrode 20 for a rechargeable lithium battery may include a current collector COL2 and a negative electrode active material layer AML2 on the current collector COL2. The negative electrode active material layer AML2 may include a negative electrode active material and may further include one or more selected from among a binder and a conductor (e.g., an electrically conductive material).

The negative electrode active material in the negative electrode active material layer AML2 may include a material that can reversibly intercalate and deintercalate lithium ions, lithium metal, a lithium metal alloy, a material that can dope and de-dope lithium, and/or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, $SiO_x$ (where $0<x<2$), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_2$, a Sn-based alloy, or a combination thereof.

The silicon-carbon composite may be a composite of silicon and amorphous carbon. In an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) is on a surface of the secondary particle. The amorphous carbon may also be between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

The negative electrode active material in the negative electrode active material layer AML2 may be present in an amount from 90 wt% to 99 wt% relative to the total weight of the negative electrode active material layer AML2. For example, the negative electrode active material may be present in an amount from 93 wt% to 99 wt% or 96 wt% to 98.5 wt% relative to the total weight of the negative electrode active material layer AML2.

The negative electrode active material may include at least one selected from among graphite and a silicon composite.

If (e.g., when) the negative electrode active material includes both a silicon composite and graphite, the silicon composite and the graphite may be included in the form of a mixture, and in this case, the silicon composite and the graphite may be included in a weight ratio from 1:99 to 50:50. For example, a weight ratio of the silicon composite and the graphite may be 3:97 to 20:80 or 5:95 to 20:80.

The silicon composite may include a core including silicon-based particles and an amorphous carbon coating layer, and the silicon-based particle may include at least one selected from among a silicon-carbon composite, $SiO_x$ (where $0<x<2$), and a silicon alloy. For example, the silicon-carbon composite may include a core including silicon particles and crystalline carbon, and may also include an amorphous carbon coating layer on a surface of the core.

The crystalline carbon may include graphite, for example, natural graphite, artificial graphite, or a mixture thereof.

The negative electrode may include a binder. The negative electrode binder may serve to improve attachment of

negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If (e.g., when) an aqueous binder is used as the negative electrode binder, a cellulose-based compound capable of providing or increasing viscosity may further be included. The cellulose-based compound may include one or more selected from among carboxymethyl cellulose, hydroxypropylmethyl cellulose, methyl cellulose, and alkali metal salts thereof. The alkali metal salt may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The binder may be present in an amount from 0.5 wt% to 5 wt% relative to the total weight of the negative electrode. For example, the binder may be present in an amount from 0.5 wt% to 3.5 wt% or 0.5 wt% to 2 wt% relative to the total weight of the negative electrode.

The negative electrode may include a conductive material (e.g., an electrically conductive material). A description of the conductive material may be as discussed herein above.

The current collector COL2 may include a copper foil, a nickel foil, a stainless-steel foil, a titanium foil, a nickel foam, a copper foam, a polymer substrate coated with a conductive metal, or a combination thereof.

**Separator 30**

Based on a type (or kind) of the rechargeable lithium battery, the separator 30 may be present between positive electrode 10 and the negative electrode 20. The separator 30 may include one or more selected from among polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, which coating layer includes an organic material, an inorganic material, or a combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer and/or mixture including two or more of the materials mentioned above.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be present mixed in one coating layer or may be present as a stack of a coating layer including the organic material and a coating layer including an inorganic material.

**Electrolyte ELL**

A rechargeable lithium battery according to an embodiment of the present disclosure may include an electrolyte for the rechargeable lithium battery.

A description of the electrolyte for the rechargeable lithium battery may be as discussed above.

The following will describe some embodiments and comparative examples of the present disclosure. The following embodiments, however, are merely examples, and the present disclosure is not limited to the embodiments discussed below.

**Embodiment**

**Fabrication of Rechargeable Lithium Battery**

**Embodiment 1**

**(1) Preparation of Electrolyte**

1.5 M of $LiPF_6$ was dissolved in a non-aqueous organic solvent containing ethylene carbonate (EC), ethylmethyl carbonate (EMC), and dimethyl carbonate (DMC) mixed in a volume ratio of 20:40:40, and then the mixture was added with 0.5 wt% of a first additive represented by Chemical Formula 1-3-1 and 0.5 wt% of a second additive represented by Chemical Formula 2-1, with the result that an electrolyte was prepared.

Chemical Formula 1-3-1

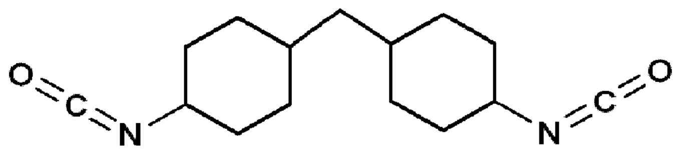

Chemical Formula 2-1

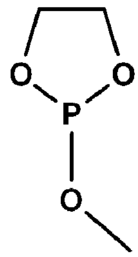

**(2) Fabrication of Rechargeable Lithium Battery**

$LiFePO_4$ as a positive electrode active material, polyvinylidene fluoride as a binder, and acetylene black as a conductive material were mixed in a weight ratio of 96:3:1, and the mixture was dispersed in N-methyl pyrrolidone to prepare a positive electrode active material slurry. The positive electrode active material slurry was coated on an Al foil of 15 μm in thickness, dried at 100 °C, and then pressed to manufacture a positive electrode.

Artificial graphite and silicon nano-particles mixed in a weight ratio of 93:7 as a negative electrode active material, styrene-butadiene rubber (SBR) as a binder, and carboxymethyl cellulose (CMC) as a thickener were mixed in a weight ratio of 98:1:1, and the mixture was distributed in distilled water to prepare a negative electrode active material slurry. The negative electrode active material slurry was coated on a Cu foil of 10 μm in thickness, dried at 100 °C, and then pressed to manufacture a negative electrode.

The positive electrode, the negative electrode, and a polyethylene separator of 10 μm in thickness were assembled to manufacture an electrode assembly, and the electrolyte prepared by the step (1) was introduced to fabricate a rechargeable lithium battery.

**Embodiment 2**

A rechargeable lithium battery was fabricated according to substantially the same method as in Embodiment 1, except that 0.25 wt% of the first additive and 0.5 wt% of the second additive were added in the step (1).

**Embodiment 3**

A rechargeable lithium battery was fabricated according to substantially the same method as in Embodiment 1, except that 0.5 wt% of the first additive and 0.25 wt% of the second additive were added in the step (1).

**Comparative 1**

A rechargeable lithium battery was fabricated according to substantially the same method as in Embodiment 1, except that neither the first additive nor the second additive was added in the step (1).

**Comparative 2**

A rechargeable lithium battery was fabricated according to substantially the same method as in Embodiment 1, except that 0.05 wt% of the first additive and 0.5 wt% of the second additive were added in the step (1).

**Comparative 3**

A rechargeable lithium battery was fabricated according to substantially the same method as in Embodiment 1, except that 0.5 wt% of the first additive and 0.05 wt% of the second additive were added in the step (1).

**Comparative 4**

A rechargeable lithium battery was fabricated according to substantially the same method as in Embodiment 1, except that a compound represented by Chemical Formula A was used in place of the first additive in the step (1).

Chemical Formula A

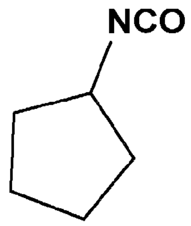

**Comparative 5**

A rechargeable lithium battery was fabricated according to substantially the same method as in Embodiment 1, except that a compound represented by Chemical Formula B was used in place of the second additive in the step (1).

Chemical Formula B

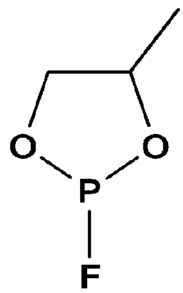

**[Evaluation Example]**

**Evaluation** 1: **Charge-Discharge Characteristics at Room Temperature**

Charge-discharge characteristics at room temperature were evaluated for the rechargeable lithium batteries fabricated according to Embodiments 1 to 3 and Comparatives 1 to 5. For example, under the conditions of 25 °C and 0.5 C charge (CC/CV, 4.4 V, 0.2 C cut-off) / 0.5 C discharge (CC, 2.5 V cut-off), a charge-discharge cycle of the rechargeable lithium battery was performed 1,000 times to measure a capacity retention rate and a change of direct-current internal resistance (DC-IR). The capacity retention rate (%) was calculated according to Equation A, and the DC-IR change rate

(%) was calculated according to Equation B.

Capacity retention rate = (discharge capacity after 1,000 cycles / discharge capacity after 1 cycle) × 100 Equation A

Equation B

$$\text{DC-IR change rate} = (\text{DC-IR after 1,000 cycles} / \text{initial DC-IR}) \times 100$$

**Evaluation 2: Storage Characteristics at High Temperature (60 °C)**

Storage characteristics at a high temperature (60 °C) were evaluated for the rechargeable lithium batteries fabricated according to Embodiments 1 to 3 and Comparatives 1 to 5.

For example, the rechargeable lithium battery was allowed to measure an initial direct-current internal resistance (DC-IR) as ΔV/ΔI (voltage change/current change), and was charged and discharged at 0.2 C once to measure a charge-discharge capacity (initial capacity). The rechargeable lithium battery was allowed to charge its maximum energy state into a full charge state (SOC 100%) and stored in the charged state at a high temperature (60 °C) for 7 days, and then discharged at 0.2 C to 3.0 V under the condition of constant current to measure a direct-current internal resistance (DC-IR after 7 days). A DC-IR increase rate (%) was calculated according to Equation C.

Equation C

$$\text{DC-IR increase rate} = (\text{DC-IR after 7 days} / \text{initial DC-IR}) \times 100$$

Afterwards, the rechargeable lithium battery was recharged at 0.2 C to 4.3 V under the condition of constant current and 0.05 C cut-off under the condition of constant voltage and discharged at 0.2 C to 3.0 V under the condition of constant current to thereby measure a discharge capacity, and a capacity recovery rate (%) was calculated according to Equation D.

Capacity recovery rate = (discharge capacity of recharged cell after storage at 60 °C for 7 days / initial discharge capacity before high-temperature storage) × 100 Equation D

Table 1

| Category | Room temperature | | 60 °C | |
|---|---|---|---|---|
| | Capacity retention rate (%) | DC-IR change rate (%) | Capacity recovery rate (%) | DC-IR increase rate (%) |
| Embodiment 1 | 94.2 | 100.6 | 98.2 | 100.1 |
| Embodiment 2 | 91.5 | 102.1 | 97.7 | 103.1 |
| Embodiment 3 | 93.1 | 101.5 | 97.8 | 102.5 |
| Comparative 1 | 82.5 | 113.8 | 91.6 | 121.5 |
| Comparative 2 | 90.5 | 103.5 | 95.4 | 103.5 |
| Comparative 3 | 89.9 | 104.2 | 94.6 | 104.2 |
| Comparative 4 | 83.4 | 107.1 | 90.5 | 108.6 |
| Comparative 5 | 88.3 | 104.8 | 93.1 | 106.4 |

Referring to Table 1, compared to the rechargeable lithium batteries of Comparatives 1 to 5, the rechargeable lithium batteries of Embodiments 1 to 3 exhibited both excellent charge-discharge characteristics at room temperature and storage properties at a high temperature (60 °C). For example, the rechargeable lithium batteries of Embodiments 1 to 3, which were fabricated using an electrolyte including the first additive represented by Chemical Formula 1 and the second

additive represented by Chemical Formula 2, showed a capacity retention rate of more than 91% and a DC-IR change rate of less than 103% at room temperature. In addition, the rechargeable lithium batteries of Embodiments 1 to 3 showed a capacity recovery rate of more than 95.5% and a DC-IR increase rate of less than 103.5% at a high temperature (60 °C). Therefore, it may be ascertained that the rechargeable lithium batteries of Embodiments 1 to 3 exhibited both excellent charge-discharge characteristics at room temperature and storage properties at a high temperature (60 °C), compared to the rechargeable lithium batteries of Comparatives 1 to 5, which used an electrolyte including an additive having a structure different from that of Chemical Formula 1 or 2 or which used no additive.

As an electrolyte for a rechargeable lithium battery according to an embodiment of the present disclosure includes a first additive represented by Chemical Formula 1 and a second additive represented by Chemical Formula 2, it may be possible to improve lifespan characteristics and stability not only at room temperature but also at high temperatures during activation of the rechargeable lithium battery.

## Claims

**1.** An electrolyte for a rechargeable lithium battery (100), the electrolyte comprising:

a lithium salt;
a non-aqueous organic solvent;
a first additive represented by Chemical Formula 1; and
a second additive represented by Chemical Formula 2,

Chemical Formula 1

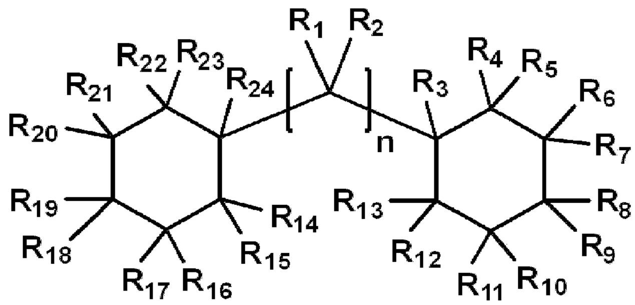

Chemical Formula 2

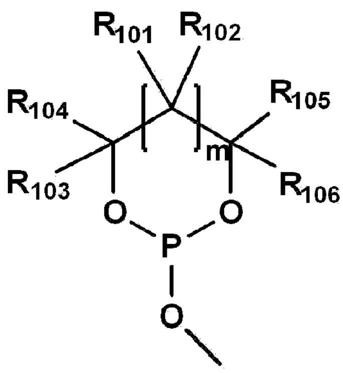

wherein, in Chemical Formulae 1 and 2,
$R_1$ and $R_2$ are each independently hydrogen or a cyclohexyl isocyanate residue,
$R_3$ to $R_{24}$ are each independently hydrogen, a halogen group, a C1 to C10 alkyl group, or an isocyanate group,
at least one selected from among $R_3$ to $R_{13}$ is an isocyanate group,
at least one selected from among $R_{14}$ to $R_{24}$ is an isocyanate group,
$R_{101}$ to $R_{106}$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or

unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,
n is an integer from 1 to 10, and
m is an integer from 0 or 1,
wherein the term "substituted" indicates that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

**2.** The electrolyte as claimed in claim 1, wherein the first additive is represented by Chemical Formula 1-1,

Chemical Formula 1-1

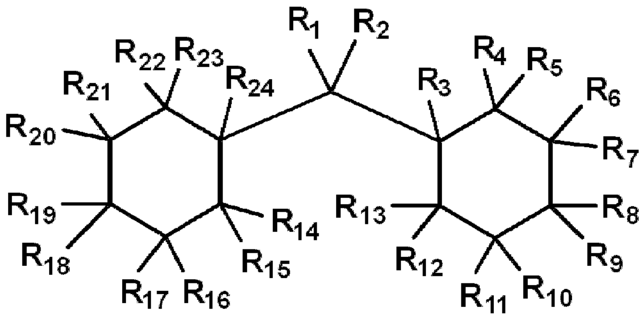

.

**3.** The electrolyte as claimed in claim 1, wherein the first additive is represented by Chemical Formula 1-2,

Chemical Formula 1-2

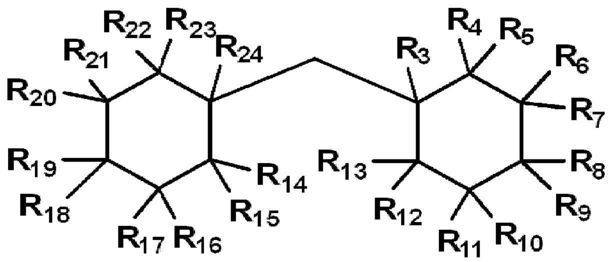

.

**4.** The electrolyte as claimed in claim 1, wherein the first additive is represented by Chemical Formula 1-3,

Chemical Formula 1-3

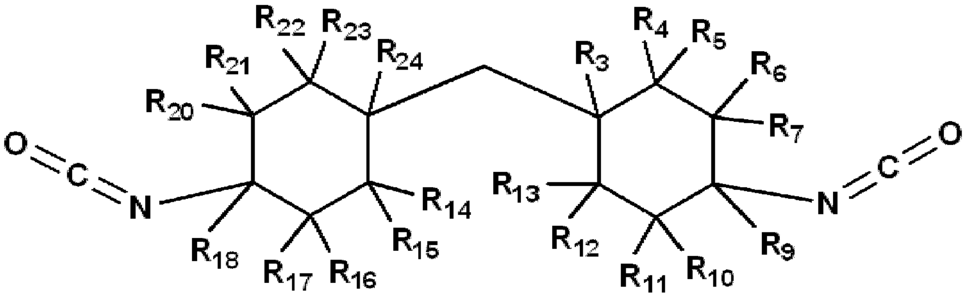

.

**5.** The electrolyte as claimed in any one of the preceding claims, wherein the second additive is represented by Chemical Formula 2-1 or Chemical Formula 2-2,

Chemical Formula 2-1

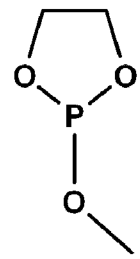

Chemical Formula 2-2

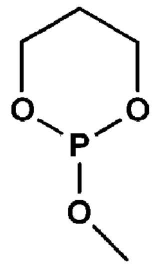

.

6. The electrolyte as claimed in any one of the preceding claims, wherein an amount of the first additive is 0.01 wt% to 5 wt% relative to a total weight of the electrolyte for the rechargeable lithium battery, and an amount of the second additive is 0.01 wt% to 5 wt% relative to a total weight of the electrolyte for the rechargeable lithium battery.

7. The electrolyte as claimed in any one of the preceding claims, wherein a weight ratio of the first additive and the second additive is 1:5 to 5:1.

8. The electrolyte as claimed in any one of the preceding claims, wherein a weight ratio of the first additive and the second additive is 1:2 to 2:1.

9. The electrolyte as claimed in any one of the preceding claims, wherein the lithium salt comprises one or more selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBOP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, and $LiC_4F_9SO_3$, and wherein a concentration of the lithium salt is 0.1 M to 2.0 M.

10. The electrolyte as claimed in any one of the preceding claims, wherein the non-aqueous organic solvent comprises one or more selected from among ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

11. The electrolyte as claimed in claim 10, wherein the non-aqueous organic solvent comprises ethylene carbonate (EC), ethylmethyl carbonate (EMC), and dimethyl carbonate (DMC).

12. The electrolyte as claimed in claim 11, wherein the ethylene carbonate (EC), the ethylmethyl carbonate (EMC), and the dimethyl carbonate (DMC) have a volume ratio of 1:a:b,

wherein a is 1 to 3, and
wherein b is 1 to 3.

13. A rechargeable lithium battery (100), comprising:

a positive electrode (10) that comprises a positive electrode active material;
a negative electrode (20) that comprises a negative electrode active material; and
the electrolyte for the rechargeable lithium battery as claimed in any one of the preceding claims.

**14.** The rechargeable lithium battery (100) as claimed in claim 13, wherein the positive electrode active material comprises a lithium-iron-phosphate-based compound.

**15.** The rechargeable lithium battery (100) as claimed in claim 13 or 14, wherein the positive electrode active material comprises at least one selected from among lithium iron phosphate (LFP), lithium manganese iron phosphate (LMFP), lithium nickel cobalt aluminum oxide (NCA), lithium nickel cobalt manganese oxide (NCM), lithium cobalt oxide (LCO), lithium manganese oxide (LMO), and lithium nickel manganese oxide (LNMO).

FIG. 1

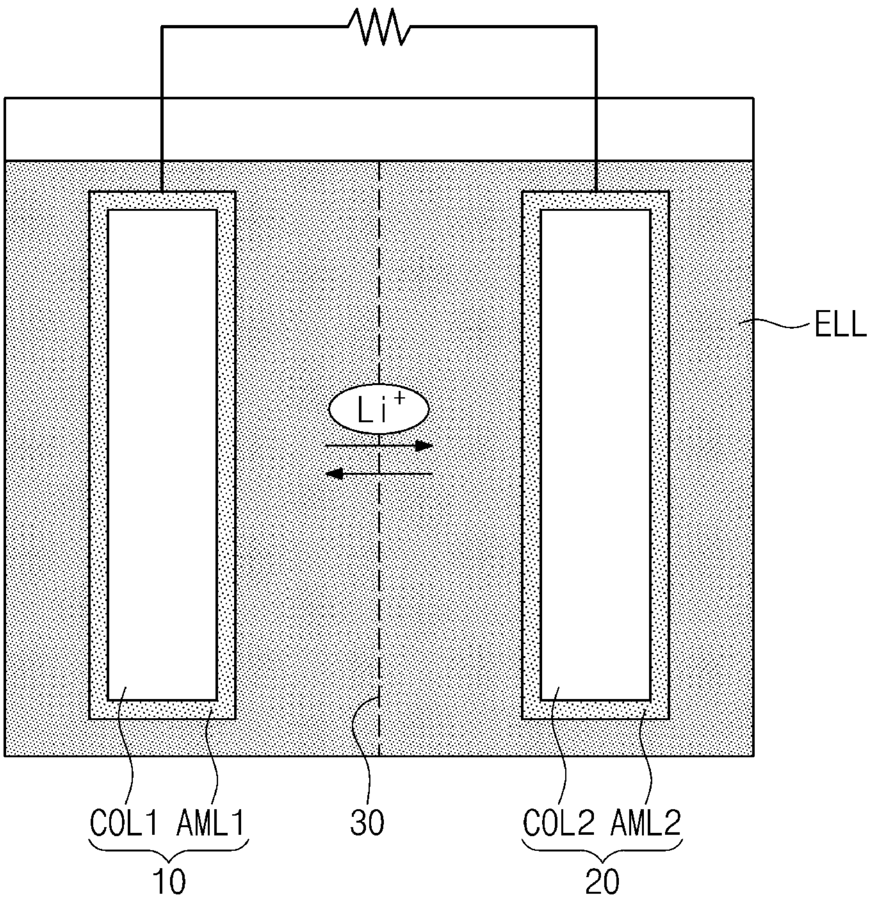

FIG. 2

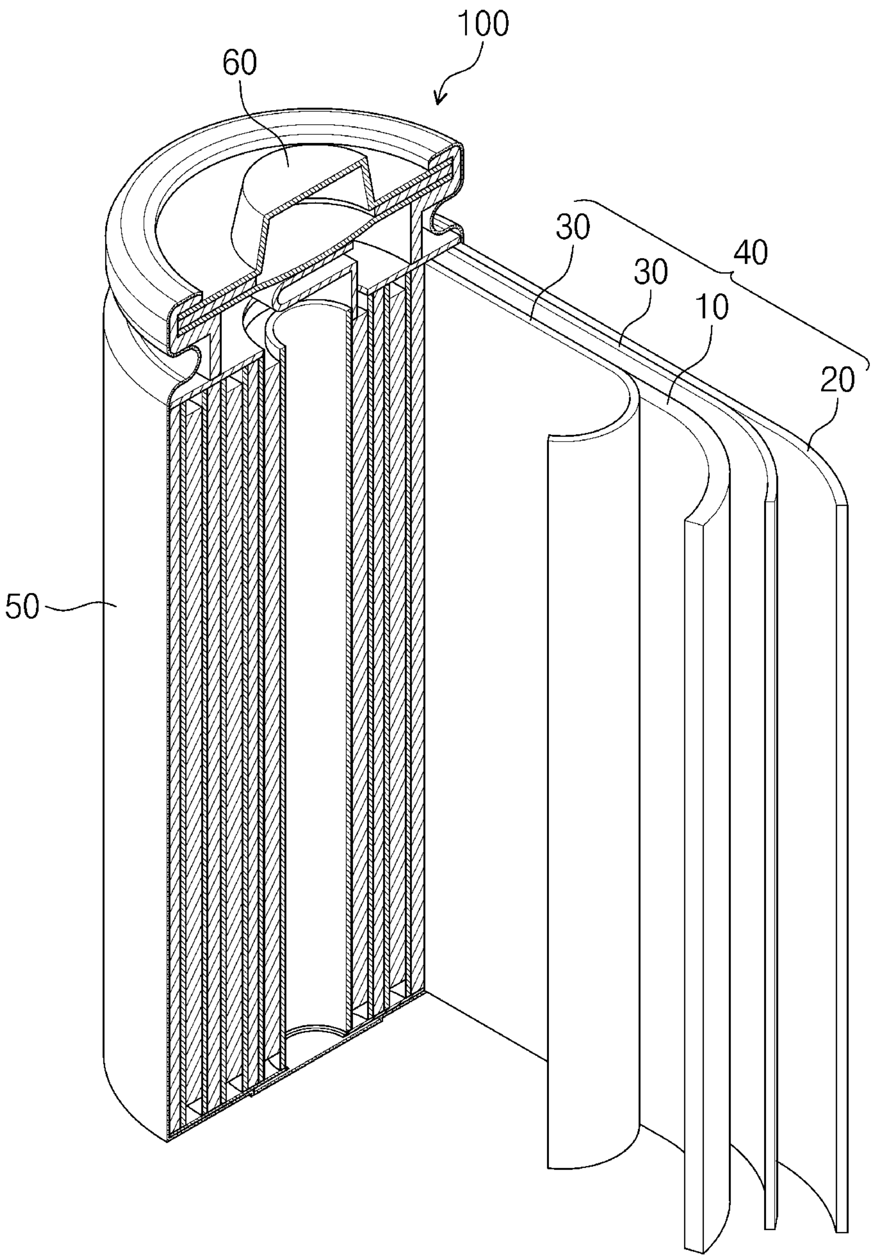

FIG. 3

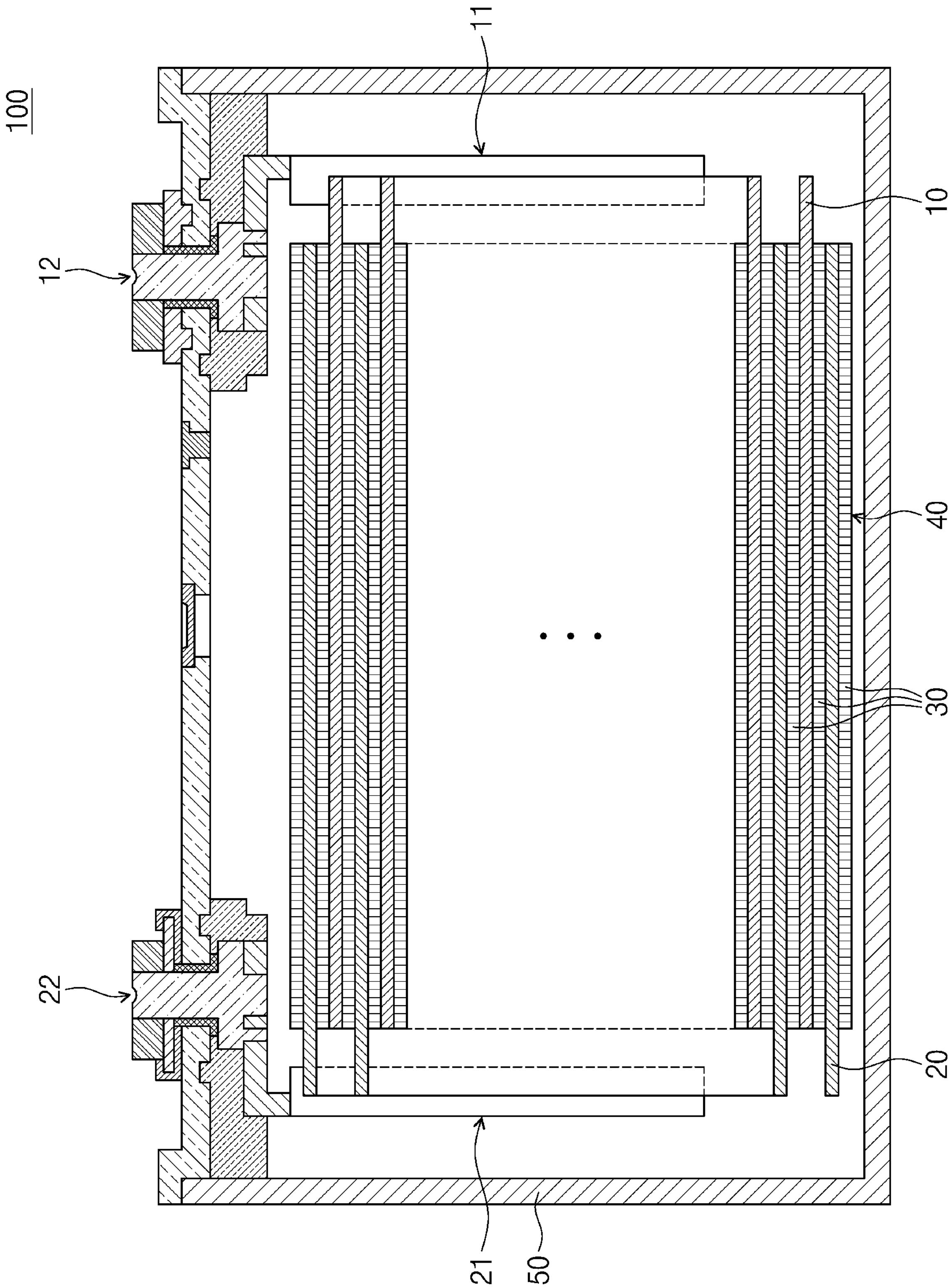

FIG. 4

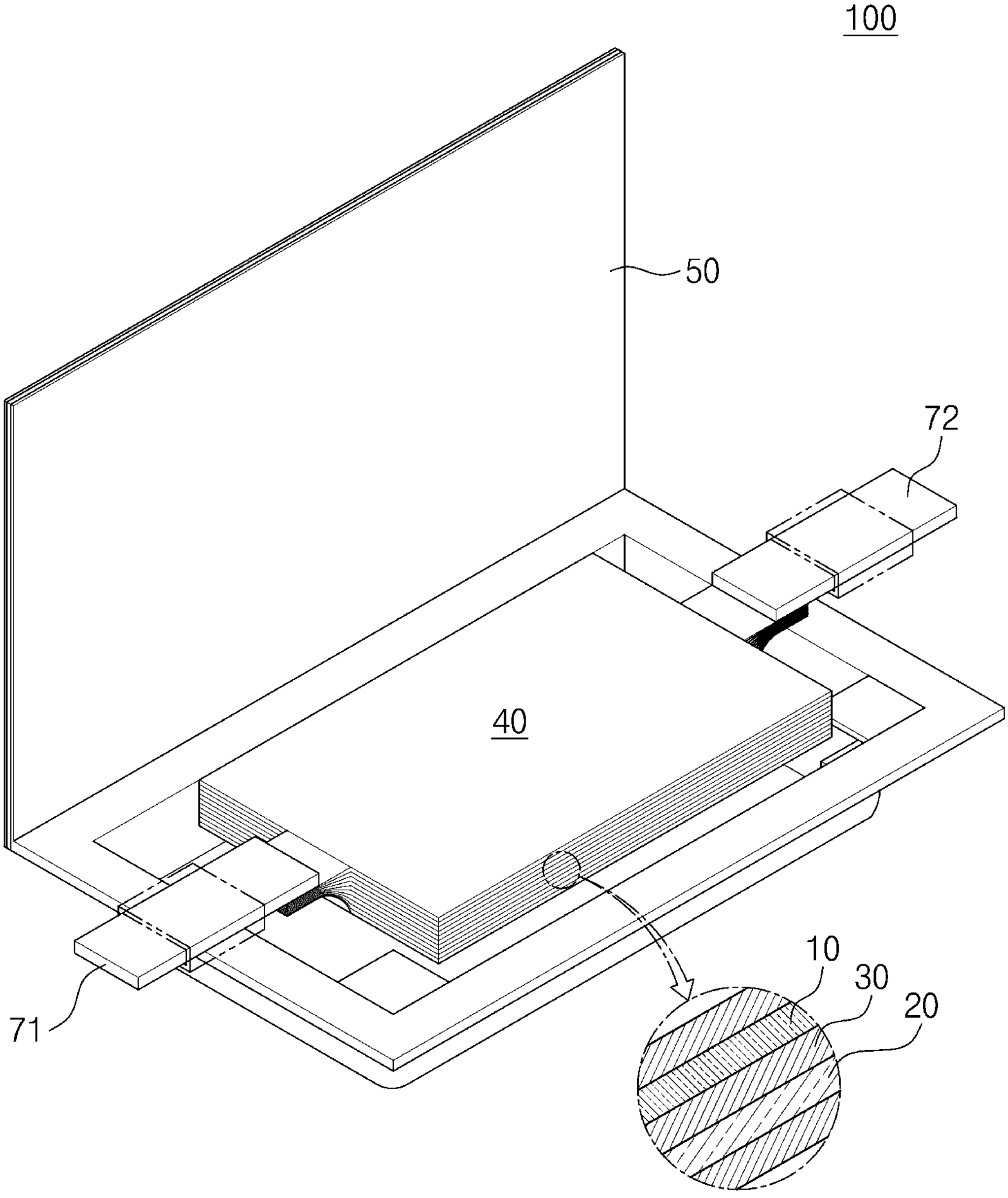

FIG. 5

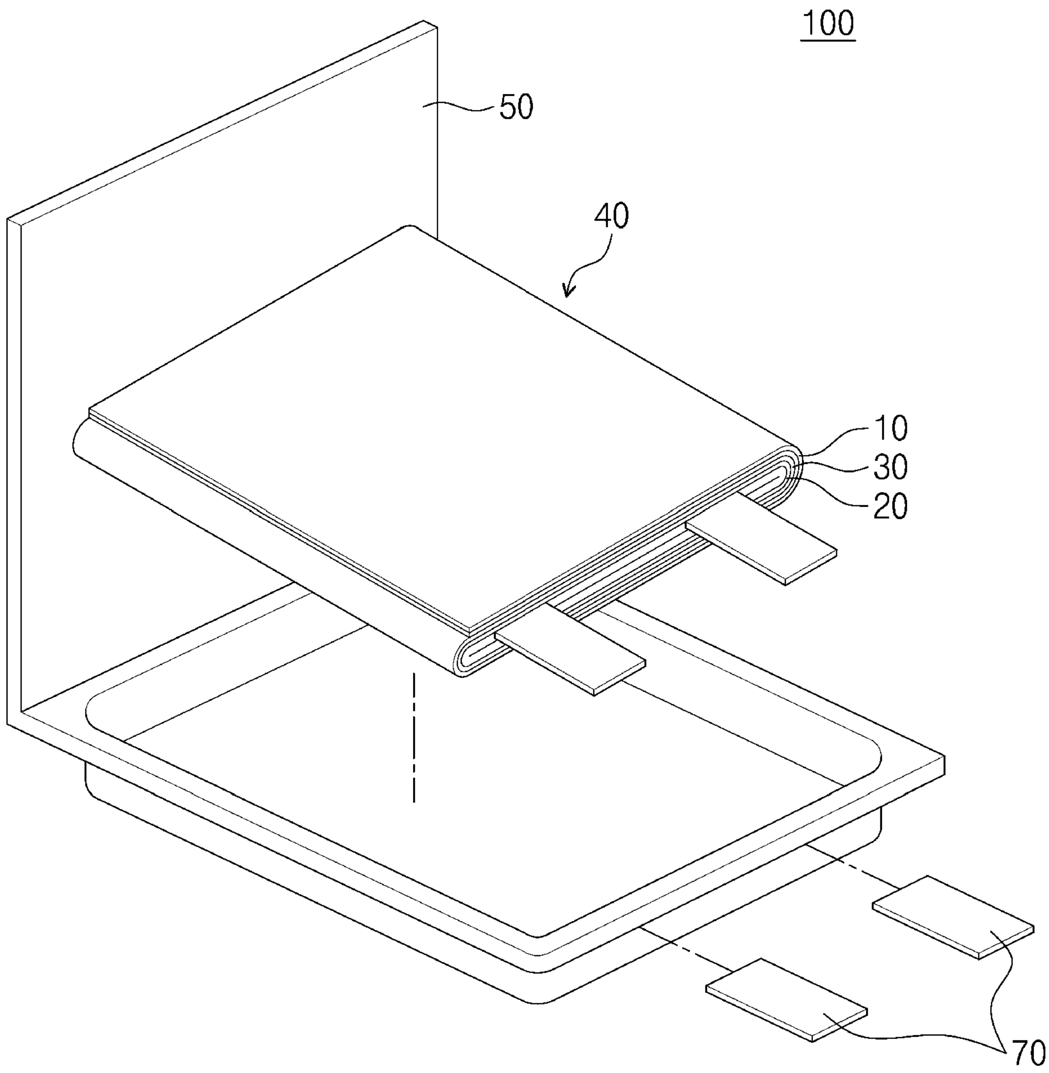

Europäisches Patentamt
European Patent Office
Office européen des brevets

# EUROPEAN SEARCH REPORT

Application Number
EP 25 18 1972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 293 777 A1 (CONTEMPORARY AMPEREX TECHNOLOGY CO LTD [CN]) 20 December 2023 (2023-12-20) * claim 1, claim 3, last compound on page 33, claim 9, 113,example 36 * * the whole document * ----- | 1-15 | INV. H01M10/052 H01M10/0525 H01M10/0567 H01M10/0568 H01M10/0569 |
| A | EP 4 293 752 A1 (CONTEMPORARY AMPEREX TECHNOLOGY CO LTD [CN]) 20 December 2023 (2023-12-20) * claim 3, compound 5, 138 * * the whole document * ----- | 1-15 | |
| A | KR 2023 0142726 A (CONTEMPORARY AMPEREX TECHNOLOGY CO LTD [CN]) 11 October 2023 (2023-10-11) * claim 3, claim 9 * * the whole document * ----- | 1-15 | |
| A | JP 2011 014379 A (SONY CORP) 20 January 2011 (2011-01-20) * example 5, 79, table 1 * * the whole document * ----- | 1-15 | TECHNICAL FIELDS SEARCHED (IPC) H01M |

The present search report has been drawn up for all claims

1

| Place of search | Date of completion of the search | Examiner |
|---|---|---|
| The Hague | 8 September 2025 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 1972

This annex lists the patent family members relating to the patent documents cited in the above-mentioned European search report. The members are as contained in the European Patent Office EDP file on
The European Patent Office is in no way liable for these particulars which are merely given for the purpose of information.

08-09-2025

| Patent document cited in search report | Publication date | Patent family member(s) | Publication date |
|---|---|---|---|
| EP 4293777 A1 | 20-12-2023 | CN 116897453 A | 17-10-2023 |
| | | EP 4293777 A1 | 20-12-2023 |
| | | JP 7646851 B2 | 17-03-2025 |
| | | JP 2024514999 A | 04-04-2024 |
| | | KR 20230142727 A | 11-10-2023 |
| | | US 2024274810 A1 | 15-08-2024 |
| | | WO 2023184496 A1 | 05-10-2023 |
| EP 4293752 A1 | 20-12-2023 | CN 116830297 A | 29-09-2023 |
| | | EP 4293752 A1 | 20-12-2023 |
| | | JP 7587708 B2 | 20-11-2024 |
| | | JP 2024514739 A | 03-04-2024 |
| | | KR 20230143143 A | 11-10-2023 |
| | | KR 20240160577 A | 11-11-2024 |
| | | KR 20240160578 A | 11-11-2024 |
| | | US 2025183352 A1 | 05-06-2025 |
| | | WO 2023184503 A1 | 05-10-2023 |
| KR 20230142726 A | 11-10-2023 | CN 116830314 A | 29-09-2023 |
| | | EP 4293754 A1 | 20-12-2023 |
| | | JP 7693009 B2 | 16-06-2025 |
| | | JP 2024515150 A | 05-04-2024 |
| | | KR 20230142726 A | 11-10-2023 |
| | | US 2024234709 A1 | 11-07-2024 |
| | | WO 2023184509 A1 | 05-10-2023 |
| JP 2011014379 A | 20-01-2011 | NONE | |

EPO FORM P0459

For more details about this annex : see Official Journal of the European Patent Office, No. 12/82